# EUROPEAN PATENT SPECIFICATION

(11) **EP 2 871 049 B1**
(45) Date of publication and mention of the grant of the patent: **21.06.2017**
(21) Application number: 14154151.6
(22) Date of filing: 06.02.2014
(51) Int. Cl.: B29D 30/46, B65H 19/26

(54) **Apparatus for cutting and winding carcass material for tires**
Schneid- und Aufwickelvorrichtung für eine Reifenstoffbahn
Appareil de découpe et d'enroulement d'un matériau de carcasse pour pneus

(30) Priority: 06.11.2013 KR 20130134018
(43) Date of publication of application: 13.05.2015
(73) Proprietor: Hankook Tire Co., Ltd., Seoul 135-723 (KR)
(72) Inventor: Kim, A Min, 306-778 DAEJEON (KR)
(74) Representative: Intès, Didier Gérard André

(56) References cited:
- EP-A2- 1 225 144
- KR-B1- 101 357 273
- US-A1- 2013 200 200
- US-A1- 2013 248 642

## Description

### BACKGROUND OF THE INVENTION

### 1. Field of the invention

The present invention relates to a carcass cutting and winding apparatus for cutting carcass cord material subjected to rubber-topping in a rolling process according to an angle and a width determined in advance, and winding the carcass cord material around a winder with liner paper interposed therebetween, in manufacture of a tire, and more particularly, to a carcass cutting and winding apparatus which can prevent folding and crumpling of cut carcass cord material while enabling process automation, thereby improving winding uniformity of the carcass material.

### 2. Description of the Related Art

During a cutting process in manufacture of a tire, carcass cord material having opposite surfaces rubber-topped in a rolling process is cut according to an angle and a width determined in advance, and the cut carcass cord material is jointly coupled, wound around a winding roller of a winder with liner paper made of a cloth being interposed therebetween, stored and preserved, and then utilized in the next process.

The carcass material manufactured through the aforementioned operation is a half-finished product of a tire and serves to form a frame of the tire as a cord layer inside the tire. When the carcass material is wound around a winder, most tasks are manually performed in the related art. For example, feeding, cutting, and winding of the carcass material is manually performed. Thus, there is a risk of accident due to work support, inaccurate cutting, and manual operation.

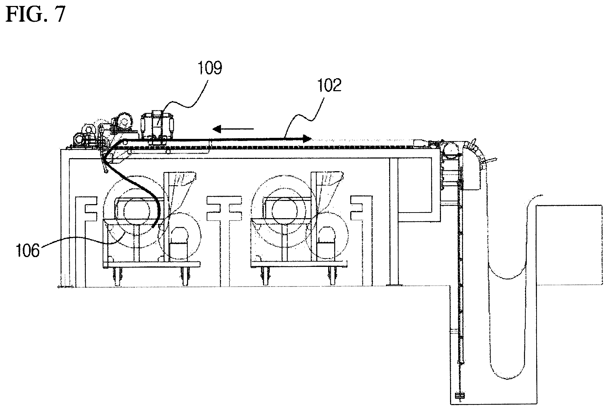

The present applicant has proposed the Korean Patent document KR 101357273 - B, entitled "Carcass cutting and winding apparatus", to solve such problems. However, as shown in Fig. 7, when the carcass cutting and winding apparatus winds a predetermined amount of carcass material 102 around a winder 106 and cuts the fed carcass material 102 using a cutter 109, the cutter 109 is located above the carcass material to be cut so that the cut distal end of the carcass material 102 is folded or crumpled due to a large drop when the cut distal end is finally wound around the winder 106, thereby causing non-uniform winding of the carcass material. Document US 2013/0200200 - A discloses an apparatus for cutting and winding a carcass material, which cuts the carcass material fed via a loop at a predetermined angle and width, and winds the carcass material around a winder, the apparatus comprising: a winder frame reciprocating by a motor along a linear guide of a support frame to guide a carcass material fed via a loop; a material guide roller guiding the carcass material to prevent separation of the carcass material; and an automatic cutting unit cuffing the carcass material to provide the carcass material to the winder.

### SUMMARY OF THE INVENTION

The present invention has been made to solve such problems in the related art, and one aspect of the present invention is to provide a carcass cutting and winding apparatus as defined in claim 1, which can uniformly wind a carcass material around a winder without folding or crumpling of a distal end of the carcass material when the continuously fed carcass material is cut, wound around the winder, and automatically stored.

In accordance with one aspect of the present invention, a carcass cutting and winding apparatus includes: a winder frame reciprocating by a motor along a linear guide of a support frame to guide a carcass material fed via a loop; a material guide roller disposed above the winder frame and guiding the carcass material to prevent separation of the carcass material; a material feeding roller disposed below the material guide roller and moving the carcass material using a rotation driving roller; and an automatic cutting unit disposed below the material feeding roller and cutting the carcass material fed through the material feeding roller to provide the carcass material to the winder while being elevated by an up-down cylinder mounted on the winder frame. Preferred embodiments of the invention are defined in the dependent claims 2 to 5.

### BRIEF DESCRIPTION OF THE DRAWINGS

The above and other aspects, features and advantages of the present disclosure will become apparent from the detailed description of the following embodiments given in conjunction with the accompanying drawings, in which:
**Fig. 1** shows an overall configuration of a carcass cutting and winding apparatus according to the present invention;
**Fig. 2** is an enlarged view of a main part shown in Fig. 1;
**Fig. 3** is a front view of a material feeding roller shown in Fig. 2;
**Fig. 4** is a front view of a material guide roller shown in Fig. 2;
**Fig. 5** shows operation states of an automatic cutting unit shown in Fig. 2;
**Fig. 6** is a perspective view of the automatic cutting unit shown in Fig. 5; and
**Fig. 7** shows a carcass cutting and winding apparatus in the related art.

### DESCRIPTION OF THE EMBODIMENTS

Hereinafter, embodiments of the present invention will be described in detail with reference to the accompanying drawings.

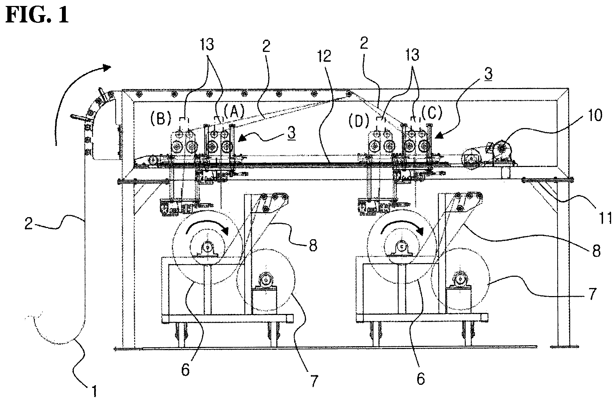

Fig. 1 shows an overall configuration of a carcass cutting and winding apparatus according to the present invention. A carcass material 2 continuously fed via a loop 1 is conveyed in an arrow direction and wound around a winder 6 rotating in the clockwise direction while overlapping with a liner board 8 fed from a liner feeding unit 7, by way of a material guide roller 4 and a material feeding roller 5 provided to a winder frame 3.

When a predetermined amount of the carcass material 2 is wound around the winder 6, an automatic cutting unit 9 having a cutter provided to the winder frame 3 descends and cuts the carcass material 2 in a state in which a drop length between a final cut portion of the wound carcass material 2 and the winder 6 is minimized, so that the carcass material 2 is wound around the winder 6 without being crumpled or folded.

The carcass cutting and winding apparatus according to the present invention for performing the aforementioned operations includes the winder frame 3 reciprocating by a motor 10 along a linear guide 12 of a support frame 11 to guide the carcass material 2 fed via the loop 1, the material guide roller 4 disposed above the winder frame 3 and guiding the carcass material 2 to prevent separation of the carcass material 2, the material feeding roller 5 disposed below the material guide roller 4 and moving the carcass material 2 using a rotation driving roller 5b, and the automatic cutting unit 9 disposed below the material feeding roller 5 and cutting the carcass material 2 fed through the material feeding roller 5 to provide the carcass material 2 to the winder 6, while being elevated by an up-down cylinder 13 mounted on the winder frame 3.

The winder frame 3 moves to a location A, B, C, or D shown in Fig. 1 along the linear guide 12 by operation of the motor 10 and thus the carcass material 2 can be fed from several locations.

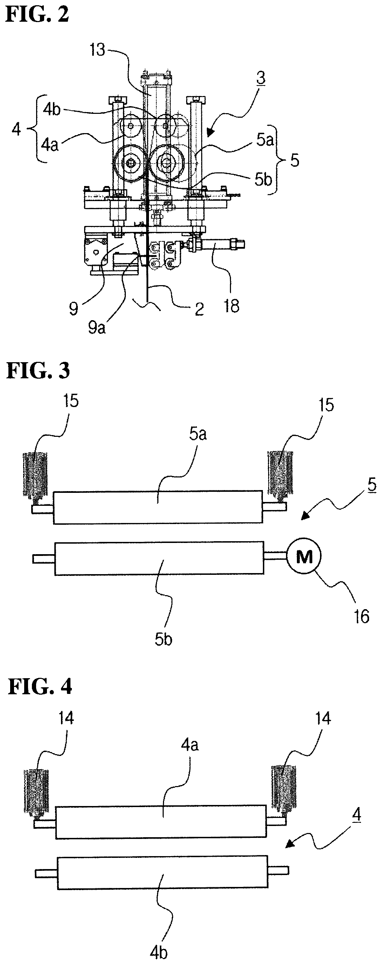

The material guide roller 4 is shown in detail in Figs. 2 and 4. The material guide roller 4 includes a set of rollers 4a and 4b. One roller 4a is connected at opposite ends thereof to cylinders 14 and the other roller 4b facing the one roller 4a is a stationary roller. The movable roller 4a can move close to and away from the stationary roller 4b. The rollers 4a and 4b rotate in opposite directions, respectively. The rollers 4a and 4b guide the carcass material 2 to prevent upward discharge of the carcass material 2 due to loop weight of the material, when the cylinders 14 move forwards and the carcass material 2 is guided and held between the movable one roller 4a and the fixed other roller 4b.

The material feeding roller 5 shown in Figs. 2 and 3 includes an actuation roller 5a moved forwards or rearwards by cylinders 15 provided to opposite ends thereof and the stationary rotation driving roller 5b rotated by a rotation motor 16. When the carcass material 2 is fed through the material guide roller 4, the actuation roller 5a is moved forwards by the cylinders 15 and contacts the stationary rotation driving roller 5b, and the carcass material 2 is fed to the winder 6 by rotation of the rotation driving roller 5b.

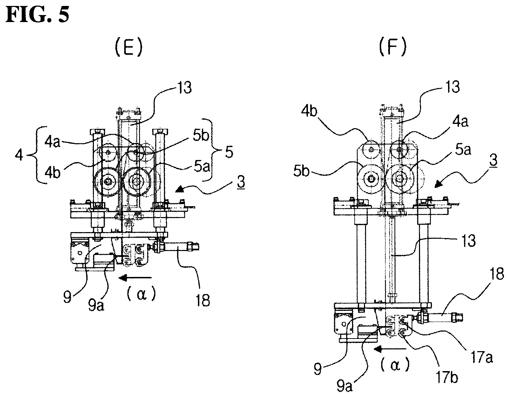

The automatic cutting unit 9 shown in Figs. 2, 5(E), and 5(F) is provided to a lower end of the winder frame 3 and is elevated by the up-down cylinder 13. When cutting the carcass material 2 fed from the material feeding roller 5, the automatic cutting unit 9 descends from a state shown in Fig. 5 (E) to a state shown in Fig. 5 (F).

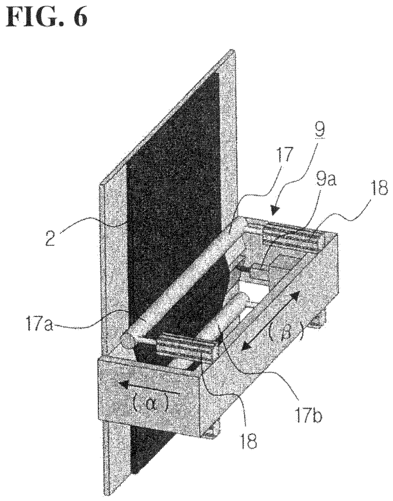

As shown in Fig. 6, upper and lower holders 17a and 17b are moved in a direction of an arrow (α) by forward movement of cylinders 18 and hold portions above and below a cutting portion of the carcass material 2, and the cutter 9a of the automatic cutting unit 9 cuts the carcass material 2 while moving leftward and rightward in a direction of an arrow (β). When cutting is completed, the upper and lower holders 17a and 17b return to the previous location, and the automatic cutting unit 9 returns from the state shown in Fig. 5 (F) to the state shown in Fig. 5 (E) by rearward movement of the up-down cylinder 13.

The cutter 9a automatically cutting the carcass material 2 has a structure of an electric heating knife.

Hereinafter, an overall operation of the carcass cutting and winding apparatus having the structure as described above will be described.

As shown in Fig. 1, when the carcass material 2 is fed to the winder 6 in a state in which the winder frame 3 is located at a location A, the winder 6 winds the carcass material 2 and the liner board 8, while rotating in the clockwise direction.

Before the winder 6 completely winds the carcass material 2, the winder frame 3 is moved to a location B along the linear guide 12, and the automatic cutting unit 9 is descended from the winder frame 3 in a direction from a location shown in Fig. 5 (E) to a location shown in Fig. 5 (F). Here, the descended automatic cutting unit 9 approaches the winder 6 as close as possible such that a drop length between a cut portion of the carcass material 2 and the winder 6 is minimized.

The automatic cutting unit 9 cuts the carcass material 2 in this state and then is moved upwards from the location shown in Fig. 5 (F) to the location shown in Fig. 5 (E). The winder frame 3 is moved toward another winder 6 on standby and performs a winding operation by feeding a new carcass material 2 to the standby winder 6 at a location C shown in Fig. 1. Then, as described above, the winder frame 3 is moved to a location D before the carcass material 2 is completely wound around the winder 6, and the automatic cutting unit 9 cuts the carcass material 2 and returns to the previous location through the aforementioned operations. Thereafter, the winder frame 3 is moved again to the location A shown in Fig. 1 along the linear guide 12 for a winding operation on another new winder 6, and automatically performs the continuous winding of the carcass material 2 for the winder.

The carcass cutting and winding apparatus according to the present invention cuts the carcass material wound around the winder such that the drop length between the final distal end of the carcass material and the winder is minimized, and thus prevents the distal end of the carcass material from being folded or crumpled while being wound around the winder, thereby improving winding uniformity of the carcass material, and enhancing work efficiency and productivity through process automation and consecutive work.

As such, the carcass cutting and winding apparatus according to the invention has advantages as follows:
1) Reduction of manual labor through process automation;
2) Speedup of facilities through reduction of unnecessary manual works;
3) Removal of accident risks associated with manual labor; and
4) Cutting uniformity of materials through automatic cutting.

Although some embodiments have been described above, it should be understood that the present invention is not limited to these embodiments and can be made in various different ways, and that various modifications, variations, and alterations can be made by those skilled in the art without departing from the scope of the present invention. Therefore, the scope of the present invention should be determined by the claims.

## Claims

1. An apparatus for cutting and winding a carcass material (2), which cuts the carcass material fed via a loop (1) at a predetermined angle and width and winds the carcass material around a winder (6), the apparatus comprising:
a winder frame (3) reciprocating by a motor along a linear guide of a support frame to guide a carcass material fed via a loop;
a material guide roller (4) disposed above the winder frame and guiding the carcass material (2) to prevent separation of the carcass material;
a material feeding roller (5) disposed below the material guide roller and moving the carcass material using a rotation driving roller (5b); and
an automatic cutting unit (9) disposed below the material feeding roller and cutting the carcass material fed through the material feeding roller to provide the carcass material to the winder while being elevated by an up-down cylinder (13) mounted on the winder frame (3).

2. The apparatus according to claim 1, wherein the material guide roller (4) comprises a set of rollers (4a,4b), one roller (4a) being a movable roller connected at opposite ends thereof to a cylinder, the other roller (4b) being disposed to face the one roller and being a stationary roller.

3. The apparatus according to claim 1 or 2, wherein the material feeding roller (5) comprises an actuation roller (5a) moved forwards and rearwards by at least one cylinder (15) provided to opposite ends thereof and a stationary rotation driving roller (5b) rotated by a rotation motor (16).

4. The apparatus according to any one of claims 1 to 3, wherein the automatic cutting unit (9) is provided to a lower end of the winder frame (3) and is elevated by the up-down cylinder (13).

5. The apparatus according to claim 4, wherein the automatic cutting unit (9) comprises upper and lower holders (17a,17b) moved forwards and rearwards by at least one cylinder (18) to hold portions above and below a cutting portion of the fed carcass material (2).

## Patentansprüche

1. Vorrichtung zum Schneiden und Aufwickeln eines Karkassenmaterials (2), die das über eine Umführung (1) zugeführte Karkassenmaterial in einem vorgegebenen Winkel und einer vorgegebenen Breite schneidet und das Karkassenmaterial um eine Wickelvorrichtung (6) wickelt, wobei die Vorrichtung umfasst:
einen Wickelvorrichtungsrahmen (3), der mittels eines Motors entlang einer linearen Führung eines Stützrahmens hin und her bewegt wird, um ein über eine Schleife zugeführte Karkassenmaterial zu führen,
eine Materialführungsrolle (4), die über dem Wickelvorrichtungsrahmen angeordnet ist und das Karkassenmaterial (2) führt, um eine Abtrennung des Karkassenmaterials zu verhindern,
eine Materialzuführrolle (5), die unter der Materialführungsrolle angeordnet ist und das Karkassenmaterial unter Verwendung einer Rotationsantriebsrolle (5b) bewegt, und
eine automatische Schneideinheit (9), die unter der Materialzuführrolle angeordnet ist und das durch die Materialzuführrolle zugeführte Karkassenmaterial schneidet, um das Karkassenmaterial für die Wickelvorrichtung bereitzustellen, während es durch einen an dem Wickelvorrichtungsrahmen (3) montierten Aufwärts-Abwärts-Zylinder (13) angehoben wird.

2. Vorrichtung nach Anspruch 1, wobei die Materialführungsrolle (4) einen Satz Rollen (4a, 4b) umfasst, wobei eine Rolle (4a) eine bewegliche Rolle ist, die an gegenüberliegenden Enden mit einem Zylinder verbunden ist, und die andere Rolle (4b) so angeordnet ist, dass sie der einen Rolle zugewandt ist, und eine ortsfeste Rolle ist.

3. Vorrichtung nach Anspruch 1 oder 2, wobei die Materialzuführrolle (5) eine Betätigungsrolle (5a) umfasst, die durch mindestens einen Zylinder (15), der an gegenüberliegenden Enden angeordnet ist, vor und zurück bewegt wird, und eine ortsfeste Rotationsantriebsrolle (5b) umfasst, die durch einen Rotationsmotor (16) gedreht wird.

4. Vorrichtung nach einem der Ansprüche 1 bis 3, wobei die automatische Schneideinheit (9) an einem unteren Ende des Wickelvorrichtungsrahmens (3) angeordnet ist und durch den Aufwärts-Abwärts-Zylinder (13) angehoben wird.

5. Vorrichtung nach Anspruch 4, wobei die automatische Schneideinheit (9) obere und untere Halter (17a, 17b) umfasst, die durch mindestens einen Zylinder (18) vor und zurück bewegt werden, um Abschnitte über und unter einem Schneidabschnitt des zugeführten Karkassenmaterials (2) zu halten.

## Revendications

1. Appareil pour découper et enrouler un matériau de carcasse (2), qui coupe le matériau de carcasse alimenté via une boucle (1) à un angle et une largeur prédéterminés, et enroule le matériau de carcasse autour d'un enrouleur (6), l'appareil comprenant :
un bâti d'enrouleur (3) effectuant un mouvement de va-et-vient grâce à un moteur le long d'un guide linéaire d'un bâti de support afin de guider un matériau de carcasse alimenté via une boucle ;
un rouleau de guidage de matériau (4) disposé au-dessus du bâti d'enrouleur et guidant le matériau de carcasse (2) pour empêcher la séparation du matériau de carcasse ;
un rouleau d'alimentation en matériau (5) disposé au-dessous du rouleau de guidage de matériau et déplaçant le matériau de carcasse à l'aide d'un rouleau d'entraînement de rotation (5b) ; et
une unité de coupe automatique (9) disposée au-dessous du rouleau d'alimentation en matériau et découpant le matériau de carcasse alimenté par le biais du rouleau d'alimentation en matériau afin de fournir le matériau de carcasse à l'enrouleur tout en étant élevée par un vérin ascendant-descendant (13) monté sur le bâti d'enrouleur (3).

2. Appareil selon la revendication 1, dans lequel le rouleau de guidage de matériau (4) comprend un ensemble de rouleaux (4a, 4b), un premier rouleau (4a) étant un rouleau mobile raccordé au niveau de ses extrémités opposées à un vérin, l'autre rouleau (4b) étant disposé pour faire face au premier rouleau et étant un rouleau fixe.

3. Appareil selon la revendication 1 ou 2, dans lequel le rouleau d'alimentation en matériau (5) comprend un rouleau d'actionnement (5a) déplacé vers l'avant et vers l'arrière par au moins un vérin (15) prévu à des extrémités opposées de celui-ci et un rouleau d'entraînement en rotation fixe (5b) entraîné en rotation par un moteur rotatif (16).

4. Appareil selon l'une quelconque des revendications 1 à 3, dans lequel l'unité de découpe automatique (9) est prévue sur une extrémité inférieure du bâti d'enrouleur (3) et est élevée grâce au vérin ascendant-descendant (13).

5. Appareil selon la revendication 4, dans lequel l'unité de découpe automatique (9) comprend des supports supérieur et inférieur (17a, 17b) déplacés vers l'avant et vers l'arrière par au moins un vérin (18) pour supporter des parties au-dessus et au-dessous d'une partie de découpe du matériau de carcasse (2) alimenté.
